# EUROPÄISCHE PATENTANMELDUNG

(11) **EP 0 603 429 A1**
(43) Veröffentlichungstag der Anmeldung: **29.06.1994**
(21) Anmeldenummer: 92122005.9
(22) Anmeldetag: 24.12.1992
(51) Int. Cl.: C10L 5/48

(54) **Brennstoff aus Industrieabfällen**

(71) Anmelder: Florio-Moos, Irene, CH-6005 Luzern (CH); BALATON HOLDING SA, L-1660 Luxembourg (LU)
(72) Erfinder: Jeney, Peter, CH-6300 Zug (CH)
(74) Vertreter: Blum, Rudolf Emil Ernst

(57) **Zusammenfassung**

Die vorliegende Erfindung betrifft einen festen Brennstoff, der bevorzugt aus organischen Industrieabfällen hergestellt wird, einen sehr hohen Heizwert aufweist und eine kontinuierlich hohe Verbrennungstemperatur gewährleistet. Die Erfindung betrifft ferner ein Verfahren zur Herstellung eines solchen Brennstoffs und ein verbrennungsförderndes Mittel, welches beispielsweise einem Brennstoff zugesetzt werden kann oder welches zur Erzeugung eines Wasserstoff/Sauerstoff-Gemischs eingesetzt werden kann, welches dann, zur Förderung der Verbrennung, direkt in die Verbrennungsanlage eingespiesen wird.

## Beschreibung

Die Erfindung betrifft einen festen Brennstoff aus flüssigen und festen Industrieabfällen sowie ein Verfahren zu dessen Herstellung und ein verbrennungsförderndes Mittel.

Verfahren zum Betrieb von Verbrennungsanlagen mit Müll und gleichzeitiger Energieerzeugung sind bekannt, der Betrieb solcher Anlagen mit Industrieabfällen, insbesondere solchen, die unter Sondermüll fallen, ist jedoch problematisch, da Sondermüll des öfteren halogenhaltige Produkte enthält, welche zur Beschädigung der Verbrennungsanlage führen können. Ferner erfordert die sichere Verbrennung von Sondermüll gleichmässige Verbrennungstemperaturen, welche nur schwierig einhaltbar sind, da die Zugabe von verschiedenen Abfallstoffen mit unterschiedlichen Heizwerten zu unerwünschten Temperaturabfällen führt. Dieses Problem wird heute meistens dadurch gelöst, dass grössere Mengen von zusätzlichen Energieträgern für die Verbrennung eingesetzt werden. Die beim Verbrennen von Sondermüll entstehenden gefährlichen Stoffe, beispielsweise Dioxine und Dibenzofurane stellen ebenfalls ein Problem dar, welches nur dadurch gelöst werden kann, dass permanent Verbrennungstemperaturen von über 1100°C eingehalten werden.

Ein weiteres Problem besteht bei der Zwischen- oder Endlagerung von toxischen, insbesondere flüssigen, aber auch festen Abfällen, welche kostenaufwendige Sicherheitsvorkehrungen erfordern. Zudem wird es heute immer schwieriger neue Standorte, sowohl für Sondermülldeponien als auch für Sondermüllverbrennungsanlagen zu finden, resp. die bereits bestehenden Anlagen zu betreiben.

Ferner stellt auch der Transport, insbesondere flüssiger toxischer Industrieabfälle, ein generelles, allgemein bekanntes Problem dar.

Aufgabe der vorliegenden Erfindung ist es nun, flüssige und feste Industrieabfälle in eine für die Umwelt unbedenkliche und durch Verbrennung entsorgbare Form mit definiertem Heizwert überzuführen.

Der erfindungsgemässe Brennstoff ist fest, gut transportierbar und lagerfähig ohne dass giftige Stoffe an die Umwelt abgegeben werden.

Der erfindungsgemässe Brennstoff ist homogen und kann auf die Erfordernisse der jeweiligen Verbrennungsanlagen eingestellt werden. Gewöhnlich hat er einen Heizwert der gleich ist oder höher liegt als der von Kohle (2000-3000 BTU). Ueblicherweise beträgt der Heizwert zwischen 4000 und 5500 BTU. Dieser Brennstoff ermöglicht eine konstante hohe Verbrennungstemperatur von bis über 1100°C, so dass auch Dioxine und PCB vollständig verbrennen.

Es hat sich ferner gezeigt, dass bei der Verwendung des erfindungsgemässen Brennstoffs trotz vorhandener Halogen-, insbesondere Chlorverbindungen, die Verbrennungsanlage durch entstehende Verbrennungsprodukte (z.B. HCl) weniger stark angegriffen wird, als dies bei herkömmlichem, halogenhaltigem Brenngut beobachtet wird.

Als Ausgangsstoffe für diesen Brennstoff sind speziell Industrieabfälle geeignet, beispielsweise Abfälle aus der chemischen Industrie und Forschung, von Mineralölen resp. deren Produkten, von organischen Lösungsmitteln einschliesslich Farben, Lacken, Klebstoffen und Harzen, von Kunststoffen und Gummis und Textilien.

Solche Abfallstoffe lassen sich mit dem in der Folge näher beschriebenen erfindungsgemässen Verfahren in den erfindungsgemässen Brennstoff überführen.

Das erfindungsgemässe Verfahren wird in der Folge anhand der Figuren näher beschrieben.

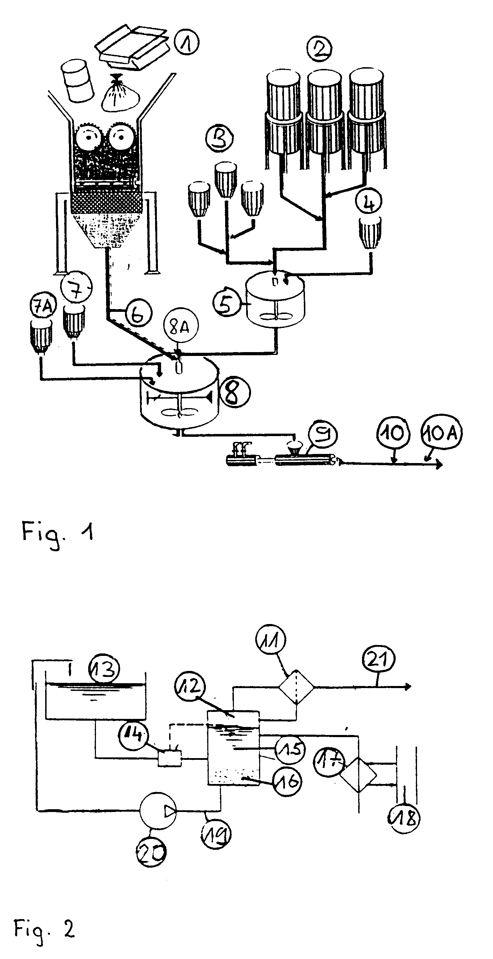

Figur 1 zeigt eine Anlage zur Herstellung des erfindungsgemässen Brennstoffs, und
Figur 2 stellt eine Verbrennungsanlage mit verbesserter Verbrennung dar.

Die Bezugszeichen in den Figuren bedeuten:
1. Zerkleinern des kalorienhaltigen Feststoffabfalles
2. Lagertanks für kalorienhaltigen Flüssigabfall
3. Zugabe der Reaktionsmittel (Steuerchemikalien)
4. Zugabe des verbrennungsfördernden Mittels
5. Mischtank
6. Zufuhr des zerkleinerten Feststoffabfalles
7. Zugabe der Metalle (Cu,Zn,Mn) resp. deren Salze und/oder der Silikate
7.A Zugabe der verfestigenden Mittel
8. Misch- und Reaktionstank
8.A Radioaktive Bestrahlung
9. Druckpumpe oder Presse
10. Zufuhr des homogenen Brennstoffes in die Verbrennungsanlage direkt oder
10.A Zufuhr des homogenen Brennstoffs zum Lager
11. Flüssigkeitsabscheider
12. Behälter zur Erzeugung des Wasserstoff/Sauerstoffgemisches, explosionsgeschützt
13. Wiederaufbereitung der Fällung
14. Regelventil/Dosiergerät
15. Lanthanidenlösung
16. Fällung
17. Wärmeaustauscher
18. Wärmequelle
19. Leitung zur Wiederaufbereitung
20. Pumpe
21. Zufuhr des Wasserstoff/Sauerstoff-Gasgemisches zur Verbrennungsanlage.

Die zu verarbeitenden Abfallstoffe werden analysiert und, falls nötig, entsprechend ihrer Analyse zwischengelagert. Für das Verfahren wichtige Analysenwerte sind der Halogenierungsgrad, der Kaloriengehalt sowie der pH-Wert. Die festen und die flüssigen Abfallstoffe werden gesondert vorbereitet: Die festen organischen Abfallstoffe 1 werden zerkleinert. Die flüssigen organischen Abfallstoffe 2 werden mit Steuerchemikalien 3 vermischt. Bei den Steuerchemikalien handelt es sich um Säuren oder Laugen, die zur Einstellung des pH-Werts des Endprodukts benötigt werden und/oder um Reduktionsmittel und/oder Oxidationsmittel. Die Entstehung einer exothermen Reaktion ist erwünscht. Nach intensivem Mischen der Flüssigkeiten in einem Mischtank 5 werden diese zusammen mit den zerkleinerten Feststoffen in einen Misch- und Reaktionstank 8 gegeben. Gleichzeitig mit den Abfallstoffen wird auch ein Verfestigendes Mittel 7A in den Misch- und Reaktionstank 8 gegeben. Danach wird das noch feuchte Mischprodukt einer Hochdruckpumpe oder Presse zugeführt, wo bei ca. 20-120°C und einem Druck von 2-4 kg/cm² ein verfestigtes Produkt gebildet wird. Gleichzeitig findet eine weitgehende Entwässerung statt. Das Wasser wird teilweise verdampft und der in flüssiger Form anfallende Rest kann wieder, in einer früheren Stufe, in den Prozess zurückgeführt werden. Dieses Produkt kann anschliessend in einer beliebigen Form der Verbrennungsanlage zugeführt werden. Dies ist besonders gut möglich, wenn das verfestigende Mittel dem Produkt mindestens teilweise thermoplastische Eigenschaften verleiht.

Als Reaktionsmittel 3 geeignet sind beliebige Laugen und Säuren, bevorzugt jedoch Natronlauge und organische Säuren aus Abfallprodukten, sowie Reduktions- und/oder Oxidationsmittel, gewöhnlich eine Mischung aus Eisen (II)- und Eisen (III)-Salzen, bevorzugt Oxiden in Mengen von 0,2 - 0,3 Volumen%. Als verfestigendes Mittel kommen Monomere und allenfalls Oligomere infrage, welche bei den Reaktionsbedingungen, üblicherweise 20-120°C und 2-4 kg/ cm² Druck, zu einer Verfestigung des Abfallgemisches führen, ohne irgendwelche Eigenschaften zu entfalten, die den Verbrennungsvorgang behindern. Als speziell geeignet haben sich Acrylmonomere erwiesen, insbesondere Acrylsäureester.

Es hat sich gezeigt, dass die gemeinsame Verarbeitung von Feststoff- und Flüssigabfällen günstig ist. Bei einem Verhältnis von 65-45 % Feststoff : 35-55 % Flüssigabfällen kann bereits mit sehr wenig Acrylsäureester, üblicherweise mit weniger als 3 %, ein verfestigtes Produkt erhalten werden. Bei geringem Gehalt an Feststoffabfällen muss natürlich mehr verfestigendes Mittel zudosiert werden.

Das Verfahren ist ausserdem so ausgelegt, dass auch im Reaktionstank eine Nachdosierung von Reaktionsmitteln stattfinden kann.

Ferner sieht das Verfahren die Möglichkeit vor, dem Reaktionsprodukt ein verbrennungsförderndes Mittel 4 zuzusetzen. Dieses kann grundsätzlich an jeder Stelle vor dem Reaktionstank zugegeben werden, aus Gründen einer homogenen Verteilung aber bevorzugt in den Mischtank 5. Ein speziell geeignetes verbrennungsförderndes Mittel enthält Salze der Lanthaniden. Beispielsweise kann das verbrennungsfördernde Mittel direkt aus Monazitsand, einem Monazitsand, in dem die Lanthaniden angereichert worden sind (auf ca. 3 bis 30 %), oder einer Mischung reiner Lanthaniden-Salze, bevorzugt mit einem Silikat als Träger, bestehen oder diese enthalten. Selbstverständlich können auch andere lanthanidenhaltige Erze verwendet werden. Das verbrennungsfördernde Mittel wird gewöhnlich in Konzentrationen bis 20 % eingesetzt.

Die Zugabe eines solchen verbrennungsfördernden Mittels ermöglicht bei gleicher Brennstoffmenge eine kontrollierte Temperaturerhöhung von üblicherweise 100-500°C.

Das erfindungsgemässe Verfahren ist ausserdem so ausgerichtet, dass direkt vor dem Reaktionstank 8 eine weitere Stufe eingeschaltet werden könnte, in der halogenhaltige Abfälle mit Gamma-Strahlen, wie sie beispielsweise von ⁶⁰Co emittiert werden, bestrahlt werden. Infolge der anwesenden Reaktionsmittel fallen die durch die Bestrahlung abgespaltenen Halogen-Atome in Form ihrer Halogenide an und werden homogen in den Brennstoff eingebaut.

Das Verfahren sieht ausserdem die Möglichkeit vor, direkt in den Reaktionstank weitere Stoffe 7 zuzugeben, welche bevorzugt Mangan, Zink, Kupfer und/oder Silikate, bevorzugt Silikate dieser Metalle, enthalten. Der Zusatz eines Kupfer und/oder Mangan und/oder Zink enthaltenden Silikats hat sich einerseits als verbrennungsfördernd und andererseits als hervorragend zur Schlackenbildung geeignet erwiesen. Mangan, Zink und allenfalls Kupfer können die Wirkung des Lanthankatalysators verstärken und werden üblicherweise in Mengen von ca. 10 % der Lanthaniden eingesetzt. Es hat sich zudem gezeigt, dass solche Metalle, insbesondere Kupfer, die Entfernung von Chlor aus chlorierten Kohlenwasserstoffen durch einen mindestens teilweise katalytischen Prozess fördern.

Der erfindungsgemässe Brennstoff wird bevorzugt in Verbrennungsanlagen mit gekoppelter Energiegewinnung verwendet. Bei Verwendung eines chlorhaltigen Produkts ist es aus umwelttechnischen Gründen vorteilhaft, wenn die Verbrennungsanlage über eine Abgasreinigungsanlage verfügt, in der allfällig entstehende Salzsäure oder andere leicht flüchtige Stoffe aus der Abluft entfernt werden können. Bei einem pH-neutralen Produkt mit guter Schlackenbildung werden die Chloride allerdings mehrheitlich in der Schlacke gebunden.

Es hat sich weiter gezeigt, dass das verbrennungsfördernde Mittel nicht unbedingt dem Brennstoff selbst zugesetzt werden muss, sondern dass dieses ausserhalb der eigentlichen Verbrennungsanlage zur Erzeugung eines Wasserstoff/Sauerstoff-Gemischs verwendet werden kann. Für die Wasser- und Sauerstofferzeugung wird das lanthanidenhaltige (mehrheitlich Lathan und Cer) verbrennungsfördernde Mittel in eine Säure gegeben, in welcher die Lanthanidenverbindungen in Lösung gehen. Diese Lösung katalysiert die Dissoziation von Wasser zu Wasserstoff und Sauerstoff. Sobald der pH-Wert ansteigt, beginnen die Lanthaniden auszufallen, worauf die Reaktion stoppt. Die Fällung kann durch Ansäuern, entweder im Druckgefäss 12 selbst oder, bevorzugt, in einem separaten Behälter 13, wieder aufgelöst und abermals der Reaktion zugeführt werden. Auch hier können geringe Mengen Mangan und/oder Zink und/oder Kupfer, meist 1- 10 % bezogen auf den Gehalt an Lanthaniden, positiv wirken.

Es hat sich gezeigt, dass die Reaktion bei Temperaturen von ca. 50-60°C ein Gemisch liefert, in dem das Verhältnis Wasserstoff : Sauerstoff von etwa 1:2 bis etwa 1:5, bevorzugt etwa 1:3, beträgt.

Es ist leicht ersichtlich, dass mit einem solchen, festen oder gelösten Katalysator, der die Wasserstoffentwicklung fördert, beliebige Verbrennungsreaktionen optimiert werden können. Beispielsweise ermöglicht es dieser Katalysator auch, Autoreifen in den Brennstoff einzuarbeiten, ohne dass die beim Verbrennen von Autoreifen üblicherweise beobachteten Probleme auftreten. Ferner kann mit einem solchen Katalysator auch der Treibstoffverbrauch in Verbrennungsmotoren abgesenkt, resp. Erdöl besser ausgenützt werden.

## Patentansprüche

1. Brennstoff aus organischen Industrieabfällen, dadurch gekennzeichnet, dass er fest ist und einen kontinuierlichen Heizwert aufweist.

2. Brennstoff gemäss Anspruch 1, dadurch gekennzeichnet, dass er Lanthaniden enthält.

3. Brennstoff gemäss Anspruch 1 oder 2, dadurch gekennzeichnet, dass er Mangan und/oder Zink und/oder Kupfer und/oder Silikate, bevorzugt mangan- und/oder zink- und/oder kupferhaltige Silikate enthält.

4. Brennstoff gemäss einem der Ansprüche 1 bis 3, dadurch gekennzeichnet, dass er einen Heizwert von über 2000 BTU, bevorzugt 4000-5500 BTU aufweist.

5. Brennstoff gemäss einem der Ansprüche 1-4, dadurch gekennzeichnet, dass er einen neutralen pH aufweist.

6. Verfahren zur Herstellung des Brennstoffs nach einem der Ansprüche 1 bis 5, dadurch gekennzeichnet, dass die festen Abfallstoffe zerkleinert und mit flüssigen Abfallstoffen gemischt werden, wonach ein verfestigendes Mittel zugegeben und die Gesamtmischung unter Druck verfestigt wird.

7. Verfahren gemäss Anspruch 6, dadurch gekennzeichnet, dass die festen Abfallstoffe und die flüssigen Abfallstoffe in einem Verhältnis von 65-45 % Feststoff : 35-55 % Flüssigkeit eingesetzt werden.

8. Verfahren gemäss Anspruch 6 oder 7, dadurch gekennzeichnet, dass als verfestigendes Mittel Acrylsäureester, insbesondere in Mengen bis 3 %, verwendet werden.

9. Verfahren gemäss einem der Ansprüche 6 bis 8, dadurch gekennzeichnet, dass den flüssigen Abfallstoffen vor Zumischung der festen Abfallstoffe als Reaktionsmittel Säuren und/oder Laugen und/oder Reduktions- und/oder Oxidationsmittel zugegeben werden und dass nach Vermischen der festen und flüssigen Abfallstoffe eine Nachdosierung der Reaktionsmittel möglich ist.

10. Verfahren gemäss einem der Ansprüche 6 bis 9, dadurch gekennzeichnet, dass den flüssigen Abfallstoffen vor Zumischung der festen Abfallstoffe Lanthaniden sowie gegebenenfalls gleichzeitig und/oder nach Zugabe der festen Abfallstoffe Mangan und/oder Zink und/oder Kupfer und/oder Silikate zugegeben werden.

11. Verfahren gemäss einem der Ansprüche 6 bis 10, dadurch gekennzeichnet, dass die Gesamtmischung bei einer Temperatur von 20 bis 120°C und einem Druck von 2 bis 4 kg/cm² verfestigt wird.

12. Verfahren gemäss einem der Ansprüche 6 bis 11, dadurch gekennzeichnet, dass Schwermetalle, insbesondere Kupfer und/oder Zink und/oder Mangan zur Förderung der Chlorentfernung aus chlorierten Kohlenwasserstoffen zugesetzt werden.

13. Verbrennungsförderndes Mittel, dadurch gekennzeichnet, dass es Lanthaniden enthält.

14. Verbrennungsförderndes Mittel gemäss Anspruch 13, dadurch gekennzeichnet, dass die Lanthaniden Lanthan und/oder Cer sind.

15. Verbrennungsförderndes Mittel gemäss Anspruch 13 oder 14, dadurch gekennzeichnet, dass es ausserdem Silikate und/oder Mangan und/oder Zink und/oder Kupfer enthält.

16. Verwendung des verbrennungsfördernden Mittels nach einem der Ansprüche 13 bis 15 als Zusatz zu einem der Brennstoffe nach einem der Ansprüche 1 bis 5, und/oder in saurer Lösung zur Herstellung eines verbrennungsfördernden Wasserstoff/Sauerstoff-Gemisches und/oder als Zusatz zu flüssigen Brennstoffen.
